# EUROPÄISCHE PATENTSCHRIFT

(11) **EP 2 679 879 B1**
(45) Veröffentlichungstag und Bekanntmachung des Hinweises auf die Patenterteilung: **02.01.2019**
(21) Anmeldenummer: 13172489.0
(22) Anmeldetag: 18.06.2013
(51) Int. Cl.: F17C 9/00

(54) **Vorrichtung zum Unterkühlen von tiefsiedenden Flüssiggasen**
Device for supercooling low boiling point liquefied gases
Dispositif de surfusion de gaz liquides à bas point d'ébullition

(30) Priorität: 27.06.2012 DE 102012013300
(43) Veröffentlichungstag der Anmeldung: 01.01.2014
(73) Patentinhaber: Messer Group GmbH, 65812 Bad Soden (DE)
(72) Erfinder: Böckler, Dietrich, 46117 Oberhausen (DE); Dietrich, Oliver, 47800 Krefeld (DE)
(74) Vertreter: Münzel, Joachim R.

(56) Entgegenhaltungen:
- EP-A1- 2 143 528
- DE-A1- 19 717 621
- US-A1- 2005 056 027

## Beschreibung

Die Erfindung betrifft eine Vorrichtung zum Unterkühlen von tiefsiedenden Flüssiggasen, mit einem isolierten Behälter zur Aufnahme eines Kühlbades, welches aus einem auf niedrigen Druck entspannten Teilstrom eines aus einem Vorratsbehälter entnommenen tiefsiedenden Flüssiggases gespeist wird, sowie einer Einrichtung zum Abzug der Gasphase aus dem isolierten Behälter, und einer Einrichtung zum Regeln des Flüssigkeitsspiegels im Kühlbad, wobei ferner eine mit dem Vorratsbehälter strömungsverbundene Auslassleitung für das zu unterkühlende tiefsiedende Flüssiggas vorgesehen ist, das mit einer Einrichtung zur Wärmeübertragung von dem zu unterkühlenden tiefsiedenden Flüssiggas in der Auslassleitung auf das Kühlbad strömungsverbunden ist.

Derartige, üblicherweise als "Unterkühler" bezeichnete Vorrichtungen kommen in verschiedenen Anwendungen zum Einsatz. Ein Beispiel ist die Kühlung von Oberflächen zwecks Entgratung von Formteilen aus Kunststoff, Gummi, Elastomeren, etc. zum Einsatz, wie etwa in der EP 2 143 528 A1 beschrieben. Um insbesondere weichere Formteile zu entgraten werden die Noppen und Grate durch Beaufschlagung mit einem aus einem tiefsiedenden Flüssiggas, wie flüssiger Stickstoff, bestehenden Kältemittel zumindest oberflächlich versprödet und anschließend in einer Behandlungkammer auf mechanischem Wege entfernt. Um zu verhindern, dass die Eintrittstemperatur des Kältemittels beim Eintritt in die Behandlungskammer der Entgratungsanlage vom Druck und der Temperatur des mit der Entgratungsanlage verbundenen Kältemitteltanks abhängt, ist beim Gegenstand der EP 2 143 528 A1 in der Kältemittelzuleitung ein Unterkühler vorgesehen, mittels dessen die Temperatur des Kältemittels vor der Behandlung der Formteile auf eine definierte Temperatur unterhalb ihrer Siedetemperatur gebracht wird. Dadurch wird insbesondere gewährleistet, dass das Kältemittel die zu behandelnden Formteile noch im flüssigen Zustand erreicht, wodurch der Stickstoffverbrauch minimiert und der Wärmeübergang vom Kältemittel auf die Formteile effizienter gestaltet wird. Der in der EP 2 143 528 A1 beschriebene Unterkühler ermöglicht zudem, das Kältemittel mit einer genau definierten Temperatur in die Behandlungskammer einzutragen. Die Temperatur des eingetragenen Kältemittels hängt also nicht mehr vom Druckzustand im Versorgungstank des Kältemediums ab. Dadurch können die zur Behandlung der Formteile erforderlichen Schritte exakt und zeitgenau festgelegt werden. Der Entgratungsprozess wird dadurch beschleunigt und der Stickstoffverbrauch weiter gesenkt.

Eine Unterkühlung eines als Kühlmittel eingesetzten tiefsiedenden Flüssiggases wird auch bei der Technik des Leichtmetall-Strangpressens eingesetzt, wie beispielsweise in der DE 198 57 790 A1 beschrieben. Gegenstand dieser Druckschrift ist ein Strangpress-Verfahren, bei dem flüssiger Stickstoff eingesetzt wird, um während des Pressvorgangs der zum Umformen des Profilstranges eingesetzten Matrize Wärme zu entziehen und somit die Umformwärme ganz oder teilweise abzuführen. Dieses Verfahren erfordert eine sehr genaue Dosierung des Kühlmittels, was jedoch bei einem tiefsiedenden Flüssiggas wie Stickstoff oder Argon insoweit problematisch ist, als dieser bereits bei der Zuführung zum Presswerkzeug zu einem schwer kalkulierbaren Teil verdampft. Daher wird das Flüssiggas mit einem Unterkühler auf eine Temperatur von beispielsweise 10K bis 15K unterhalb seiner Siedetemperatur unterkühlt, sodass gewährleistet ist, dass der Stickstoff vollständig in flüssigen Zustand auf die Matrize auftrifft.

Eine bei den vorgenannten Anwendungen einsetzbare Einrichtung zum Unterkühlen umfasst einen Behälter mit thermisch isolierten Wänden, in dessen Innern eine Kühlschlange als Wärmetauscher angeordnet ist. Durch die Kühlschlange wird ein tiefsiedendes Flüssiggas, beispielsweise flüssiger Stickstoff, aus einem Versorgungstank herangeführt und nach Durchlaufen der Kühlschlange der Behandlungseinrichtung zugeführt. Eine gleichfalls mit dem Versorgungstank verbundene Zweigleitung mündet an einem Entspannungsventil in den isolierten Behälter ein. Beim Entspannungsventil handelt es sich beispielsweise um ein Schwimmerventil, bei dem eine mit einem Schwimmkörper ausgerüstete Mechanik bei Unterschreiten einer vorgegebenen Höhe des Flüssiggaspegels im Behälter (im Folgenden "Grenzfüllhöhe") eine Zuströmöffnung zum Zuführen von flüssigem Stickstoff aus dem Vorratstank in den Druckbehälter freigibt bzw. diese bei Überschreiten der Grenzfüllhöhe schließt. Die Gasphase im Behälter ist mit einer Abgasleitung zum Ableiten von verdampftem Flüssiggas strömungsverbunden, in der ein Druckhalteventil montiert ist, das den Druck in der Abgasleitung stromaufwärts zum Druckhalteventil und damit zugleich im Behälter im wesentlichen konstant hält. Der Druck im Behälter ist dabei stets niedriger als der Druck im Versorgungstank bzw. in der durch den Behälter hindurch geführten Kühlschlange. Dementsprechend ist auch die Temperatur des Flüssiggases im Behälter niedriger als die Temperatur des Flüssiggases in der Kühlschlange. Daher gibt das durch die Kühlschlange geführte Flüssiggas Wärme an das umgebende Flüssiggas-Kühlbad im Behälter ab und weist im Folgenden eine Temperatur auf, die deutlich niedriger (abhängig vom Druckunterschied üblicherweise zwischen 1 K und 10 K) als die Siedetemperatur des Flüssiggases beim in der Kühlschlange herrschenden Druck ist. Anstelle eines mechanischen Schwimmerventils kann im Übrigen auch ein Magnetventil zum Einsatz kommen, mittels dem das Nachfüllen von Flüssigstickstoff in den Druckbehälter in Abhängigkeit von der durch geeignete Sensoren gemessene Füllhöhe des Flüssigstickstoffs im Druckbehälter geregelt wird.

Eine Weiterentwicklung stellt die in der EP 0 524 432 A1 beschriebene Integration eines Gasphasenseparators in den Unterkühler dar, der gasförmigen Stickstoff, der noch vor dem Unterkühlungsvorgang in seiner Gasphase übergegangen ist, von der flüssigen Phase trennt. Das Wirkprinzip des in dieser Druckschrift beschriebenen Unterkühlers ist ansonsten gleich dem zuvor beschriebenen.

Die derzeit gebräuchlichen Unterkühler sind insbesondere bei großen Stickstoffdurchsätzen (also hoher Kühlleistung) und der damit einhergehenden raschen Verdampfung des im Druckbehälter vorliegenden Flüssiggases nachteilig, da durch die rasche Verdampfung des Flüssiggases das Kühlbad im Behälter häufig und/oder mit einem großen Zulaufstrom in den Druckbehälter nachgefüllt werden muss. Heute eingesetzte mechanische Schwimmerventile sind in ihrer Kapazität begrenzt und können nur einen Durchfluss von maximal ca. 200 kg/h absichern. Übliche Magnetventile sind zwar auch für höhere Durchflüsse geeignet, verursachen aber eben dadurch beim Öffnen/Schließen heftige Druckschwankungen im Leitungssystem, die sich nachteilig auf die exakte Dosierung und/oder Temperierung des Flüssigstickstoffs auswirken können. Eine exakte und zuverlässige Temperierung ist jedoch für viele Anwendungen, wie beispielsweise bei der oben genannten Entgratung von Formteilen, unerlässlich für den Erfolg der Behandlung.

Aufgabe der vorliegenden Erfindung ist daher, eine Vorrichtung zum Unterkühlen kryogener Flüssigkeiten zu schaffen, die insbesondere auch bei hohen Durchflüssen mit hoher Zuverlässigkeit arbeitet.

Gelöst ist diese Aufgabe bei einer Vorrichtung der eingangs genannten Art und Zweckbestimmung dadurch, dass zwecks Speisung des Kühlbades eine Mehrzahl von mit dem Vorratsbehälter strömungsverbundenen, mit einer Sperrarmatur ausgerüsteten Zuleitungen in den isolierten Behälter ausmünden, wobei jede der Sperrarmaturen mit einer Einrichtung zum Erfassen der Füllhöhe des Kühlbades derart wirkverbunden ist, dass die Sperrarmatur bei einer vorgegebenen Füllhöhe (hier "Grenzfüllhöhe" genannt) die jeweilige Zuleitung öffnet bzw. schließt, wobei für wenigstens zwei Zuleitungen eine unterschiedliche Grenzfüllhöhe vorgegeben ist.

Durch den Wärmetausch des Kühlbades mit der Auslassleitung, durch das das zu unterkühlende Flüssiggas geführt wird, verdampft Flüssiggas aus dem Kühlbad. Der Flüssiggasspiegel im Kühlbad sinkt, und der entstehende Dampf wird abgezogen und so der Druck im isolierten Behälter zumindest weitgehend konstant gehalten. Die Regeneration des Kühlbades erfolgt über den Zustrom von Flüssiggas über die mit dem Vorratsbehälter strömungsverbundenen Zuleitungen. Erfindungsgemäß ist jeder Zuleitung eine "Grenzfüllhöhe" zugeordnet. Sinkt der Füllstand im Kühlbad unter diese Grenzfüllhöhe, wird die Zuleitung geöffnet, das über diese Zuleitung geführte Flüssiggas strömt aus dem Vorratsbehälter in den isolierten Behälter ein, wobei es sich auf den im isolierten Behälter vorliegenden Druck entspannt. Übersteigt die Füllhöhe im Kühlbad diese Grenzfüllhöhe, wird die Zuleitung geschlossen. Die Grenzfüllhöhen von zumindest zwei der Zuleitungen sind unterschiedlich gewählt, sodass die Zuleitungen bei unterschiedlichen Füllhöhen geöffnet bzw. geschlossen werden. Bei fortschreitendem Sinken des Füllstandes im Kühlbad werden die Zuleitungen somit nacheinander in Abhängigkeit von der Füllhöhe im Kühlbad zugeschaltet, wodurch der Zulaufstrom sukzessive vergrößert wird. Bei wieder steigender Füllhöhe im Kühlbad werden die Zuleitungen ebenso sukzessive in Abhängigkeit von der Füllhöhe geschlossen und damit der Zulaufstrom sukzessive verkleinert. Damit werden Druckschwankungen, die nach dem Stande der Technik aufgrund des plötzlich einsetzenden und ebenso plötzlich bei Überschreiten einer Höchstfüllmenge im Kühlbad abbrechenden Zustroms von Flüssiggas in das Kühlbad über die in der Regel einzige vorhandene Zuleitung wirkungsvoll vermieden.

Die Anzahl der Zuleitungen, die in jeweils unterschiedlichen Füllhöhen geöffnet bzw. geschlossen werden, hängt dabei von den jeweiligen Erfordernissen ab. Grundsätzlich führt eine höhere Anzahl von Zuleitungen zu einer Verstetigung der Zu- und Abnahme des Zustroms und damit zu einer Verringerung der Druckschwankungen. In den meisten Fällen sollte aber eine Anzahl von drei, vier oder fünf Zuleitungen, die jeweils bei unterschiedlichen Füllhöhen geöffnet bzw. geschlossen werden, genügen, um negative Effekte aufgrund der Druckschwankungen weitgehend auszuschalten. Ebenso hängt die Vorgabe der Grenzfüllhöhen, bei denen die Zuleitungen jeweils geöffnet und geschlossen werden, von den jeweiligen Anforderungen ab, insbesondere von der zu erbringenden Kühlleistung beim Wärmeaustausch mit der Auslassleitung.

Eine bevorzugte Ausgestaltung der Erfindung sieht vor, dass als Sperrarmaturen in den Zuleitungen Schwimmerventile vorgesehen sind, bei denen eine mit einem Schwimmkörper wirkverbundene Mechanik die Zuleitung in Abhängigkeit von der Füllhöhe des Kühlbades öffnet bzw. schließt. Die Lage der Schwimmkörper bestimmt zugleich die Grenzfüllhöhe der jeweiligen Zuleitung; erfindungsgemäß sind dabei die Schwimmkörper von zumindest zwei Zuleitungen in unterschiedlichen Höhen angeordnet.

Alternativ oder ergänzend zu den vorgenannten Schwimmerventilen kommt als Sperrarmatur in wenigstens einer Zuleitung ein Magnetventil zum Einsatz, und als Einrichtung zum Erfassen der Füllhöhe ist eine elektronische Füllstandserfassung vorgesehen, die bei Erreichen der vorgegebenen Füllhöhe ein Steuersignal zum Öffnen bzw. Schließen des Magnetventils abgibt. Bei der Einrichtung zum Erfassen der Füllhöhe können alle hierzu geeigneten Einrichtungen zum Einsatz kommen, beispielsweise Einrichtungen, die den Füllstand auf Basis des elektrischen Widerstands oder auf Basis der unterschiedlichen optischen oder dielektrischen Eigenschaften des Kühlbades der der darüber befindlichen Dampfphase erfassen.

Bevorzugt weisen wenigstens drei Zuleitungen unterschiedliche Grenzfüllhöhen auf, wobei die Höhenabstände zwischen den Grenzfüllhöhen entweder gleich oder unterschiedlich gewählt sind. Im einfachsten Fall unterscheiden sich die Grenzfüllhöhen jeweils um die gleichen Betrag, sodass die Zahl der zugeschalteten Zuleitungen linear mit sinkendem bzw. steigendem Füllstand zu- bzw. abnimmt. Beispielsweise unterscheiden sich die Grenzfüllhöhen jeweils um 5 cm, sodass bei Absinken der Füllhöhe um 10 cm zwei, bei Absinken der Füllhöhe um 20 cm vier Zuleitungen geöffnet werden. Es kann fallweise jedoch vorteilhaft auch sein, den Abstand der Füllhöhen, bei denen aufeinanderfolgende Zuleitungen zu- oder abgeschaltet werden, unterschiedlich zu wählen, um so den Zufluss in das Kühlbad noch besser an den Bedarf der jeweilige Aufgabe des Unterkühlers anzupassen.

Die einzelnen Zuleitungen weisen zweckmäßigerweise jeweils gleichen Strömungsquerschnitt auf, der Zustrom steigt also linear mit der Zahl der zugeschalteten Zuleitungen. Fallweise erweist es sich jedoch als vorteilhaft, den Strömungsquerschnitt der Zuleitung unterschiedlich zu gestalten und dadurch ein Profil der Zuströmung vorzugeben, der der jeweiligen Kühlaufgabe optimal angepasst ist. Erfordert beispielsweise die Aufgabe, in der die erfindungsgemäße Vorrichtung eingesetzt wird, in einem bestimmten Zeitintervall regelmäßig einen starken Durchsatz an zu unterkühlendem Flüssiggas, so empfiehlt es sich, in diesem Zeitintervall auch einen erhöhten Zustrom an Flüssiggas in das Kühlbad zuzulassen, was beispielsweise durch einen vergrößerten Querschnitt und/oder durch eine größere Anzahl der dann zu öffnenden Zuleitungen umgesetzt werden kann.

Eine abermals vorteilhafte Weiterbildung der Erfindung sieht vor, dass der Auslassleitung für das zu unterkühlende Flüssiggas ein Gasphasenseparator zugeordnet ist. Beim Gasphasenseparator handelt es sich beispielsweise um einen Gegenstand, wie er in der EP 0 524 432 A1 beschrieben ist. Dabei ist innerhalb des Kühlbads im isolierten Behälter ein weiterer Behälter (im folgendenen "Separatorbehälter" genannt) mit thermisch gut leitenden Wänden aufgenommen, in den die mit dem Vorratsbehälter strömungsverbundene Auslassleitung einmündet. Im oberen Teil des Separatorbehälters ist ein Gasauslass vorgesehen, der mit der Gasphase im Vorratstank strömungsverbunden ist und durch den bereits auf dem Weg von Vorratsbehälter verdampftes Flüssiggas abgezogen wird. Zum Abzug der Flüssigphase weist der Separatorbehälter in seinem unteren Teil einen Anschluss auf, von dem aus das unterkühlte Flüssiggas zur weiteren Verwendung abgeführt wird. Dem Anschluss zum Abzug der Flüssigphase schließt sich strömungstechnisch ein Wärmetauscher an, beispielsweise eine Kühlschlange, in der die dem Gasphasenseparator entnommene Flüssigphase durch thermischen Kontakt mit dem Kühlbad im isolierten Behälter weiter unterkühlt wird. Durch den Gasphasenseparator wird sichergestellt, dass das durch einem Verbraucher zugeführte unterkühlte Flüssiggas sich zumindest weitestgehend im flüssigen Zustand befindet und keine oder nur wenige gasförmige Einschlüsse enthält.

Anhand der Zeichnung soll ein Ausführungsbeispiel der Erfindung näher erläutert werden.

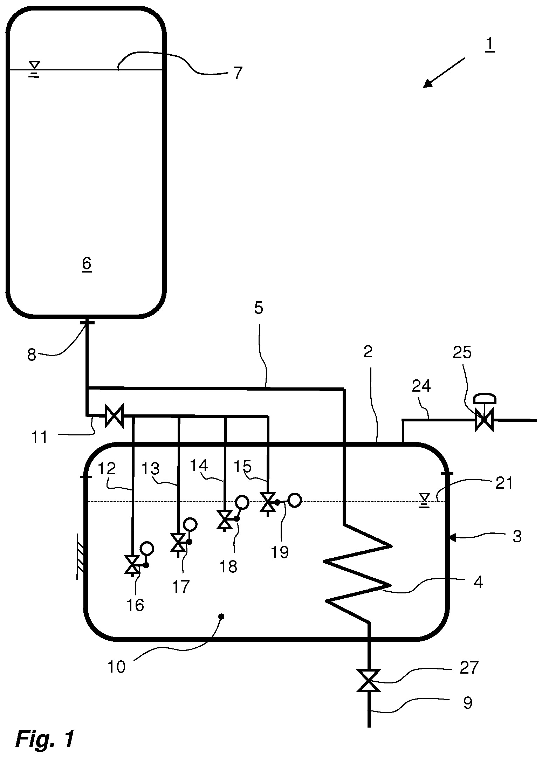

Die einzige Figur (Fig. 1) zeigt schematisch eine erfindungsgemäße Vorrichtung zum Unterkühlen kryogener Flüssigkeiten.

Die Vorrichtung 1 zum Unterkühlen umfasst einen mit einem Deckel 2 verschlossenen Behälter 3 mit thermisch isolierten Wänden. Im Innern des Behälters 3 ist ein Wärmetauscher, im Ausführungsbeispiel eine Kühlschlange 4, angeordnet, die über eine druckfeste und wärmeisolierte Stickstoffzuleitung 5 mit einem wärmeisolierten Versorgungstank 6 strömungsverbunden ist. Im Versorgungstank 6 wird der Stickstoff im tiefkalt verflüssigten Zustand bis zur Höhe eines Pegels 7 bevorratet. Der Stickstoff liegt im Innern des Versorgungstanks 6 bei seiner Siedetemperatur vor bezogen auf den im Innern des Versorgungstanks 6 herrschenden Druck vor; im unteren Bereich des Versorgungstanks 6, im Bereich eines Anschlussstutzens 8 für die Stickstoffzuleitung 5, tritt der hydrostatische Druck der im Innern des Versorgungstanks 6 bis zur Höhe des Pegels 7 stehenden Flüssigkeitssäule hinzu.

So beträgt beispielsweise bei einem Druck von 5 bar im Bereich des Anschlussstutzens 8 die Temperatur des Stickstoffs etwa minus 180°C. An die Kühlschlange 4 schließt sich stromabwärts eine thermisch isolierte Anschlussleitung 9 an, über die der flüssige Stickstoff anschließend einer weiteren Verwendung zugeführt wird, beispielsweise als Kühlmittel einer hier nicht gezeigten Vorrichtung zum Leichtmetall-Strangspressen zugeführt. Innerhalb des Behälters 3 befindet sich ein Flüssigstickstoffbad 10, in das die Kühlschlange 4 ganz oder teilweise eintaucht, jedoch besteht zwischen der Kühlschlange 4 und dem im Behälter 3 vorliegenden Kühlmittel keine Strömungsverbindung.

Von der Stickstoffzuleitung 5 zweigt eine Kältemittelzuleitung 11 ab, von der wiederum mehrere, im Ausführungsbeispiel vier, Zweigleitungen 12, 13, 14, 15 abgehen, die jeweils in das Innere des Behälters 3 einmünden. Die Zweigleitungen 12, 13, 14 ,15 münden jeweils auf unterschiedlichen Höhen innerhalb des Behälters 3 aus und sind ausgangsseitig jeweils mit Schwimmerventilen 16, 17, 18, 19 ausgerüstet, deren Schwimmer ebenfalls auf unterschiedlichen Höhen innerhalb des Behälters 3 angeordnet sind. Die Schwimmerventile 16, 17, 18, 19 funktionieren in der Weise, dass bei Unterschreiten einer für jedes der Schwimmerventile 16, 17, 18, 19 vorgegebenen Füllhöhe ("Grenzfüllhöhe") des Flüssigstickstoffbades 10 im Behälter 3, die jeweilige Zweigleitung 12, 13, 14, 15 geöffnet wird und flüssiger Stickstoff in den Behälter 3 nachströmt, wobei sich diese auf den Druck im Behälter 3 entspannt. Die Grenzfüllhöhen der Zweigleitungen 12, 13, 14, 15 sind dabei unterschiedlich; beispielsweise liege die Grenzfüllhöhe der Zweigleitung 15 um 10 cm oberhalb der Grenzfüllhöhe der Zweigleitung 14, 20 cm oberhalb der Grenzfüllhöhe der Zweigleitung 13 und 30 cm oberhalb der Grenzfüllhöhe der Zweigleitung 12, sodass bei Abnahme der Füllhöhe um jeweils 10 cm eine weitere Zweigleitung geöffnet wird.

Anstelle des Schwimmerventile 16, 17, 18, 19 können im Übrigen auch andere Einrichtungen vorgesehen sein, die in Abhängigkeit von der Höhe des Pegels 21 des Flüssigstichstoffbades 10 die Zuführung von Flüssigstickstoff durch die Zweigleitungen 12, 13, 14, 15 steuern, beispielsweise Magnetventile, die mit beispielsweise supraleitenden Sensoren zur Füllstandserfassung wirkverbunden sind.

Im Deckel 2 des Behälters 3 ist eine Abgasleitung 24 zum Ableiten von gasförmigem Stickstoff aus dem Behälter 3 vorgesehen. In der Abgasleitung 24 ist ein Druckhalteventil 25 montiert, das den Druck in der Abgasleitung 24, stromaufwärts zum Druckhalteventil 25 und damit zugleich im Behälter 3 auf einen vorbestimmten Wert von beispielweise 1 bar konstant hält. Durch entsprechende Einstellung des Druckhalteventils 25 kann der Druck im Behälter 3 auch auf höhere Werte als 1 bar eingestellt werden; er muss jedoch geringer sein als der Druck in Vorratsbehälter 6 im Bereich des Anschlussstutzens 8, um zu gewährleisten, dass die Temperatur des Flüssigstickstoffbads 10 niedriger ist als die Temperatur des Flüssigstickstoffs in der Stickstoffzuleitung 5. So ergibt sich beispielsweise bei einem eingestellten Druck im Behälter 3 von 1 bar eine Temperatur des Flüssigstickstoffs im Behälter 3 von ca. minus 196°C und damit eine geringere Temperatur als die des Flüssigstickstoffs im Vorratsbehälter 6 bei einem dort angenommenen Druck von 5 bar, nämlich minus180°C. Im Übrigen können durch Einbau einer hier nicht gezeigten Absaugeinrichtung in der Abgasleitung 24 im Behälter 3 auch niedrigere Drücke als Umgebungsdruck (Atmosphärendruck) und somit noch tiefere Temperaturen des Flüssigkeitsbades 10 als minus 196°C erreicht werden. In einer vereinfachten Ausführung kann weiterhin auf das Druckhalteventil 25 ganz verzichtet und der Druck im Behälter 3 somit stets auf Atmosphärendruck gehalten werden. In diesem Falle ist die Temperatur des verdampfenden Stickstoffs im Innern des Behälters 3 jedoch gewissen, durch Änderungen des Atmosphärendrucks bedingten Schwankungen unterworden.

Als kryogenes Kältemittel kommt im Ausführungsbeispiel flüssiger Stickstoff zum Einsatz, im Rahmen der Erfindung sind jedoch auch andere kryogene Kältemittel denkbar, beispielsweise LNG, flüssiger Sauerstoff, flüssiger Wasserstoff oder ein verflüssigtes Edelgas, beispielsweise Argon oder Helium.

Beim Betrieb der Vorrichtung 1 liegt die Füllhöhe des Flüssigstickstoffbades 10 zunächst oberhalb des obersten Schwimmerventils 19. Alle Schwimmerventile 16, 17, 18, 19 sind in diesem Fall geschlossen und kein Flüssigstickstoff kann aus dem Vorratsbehälter 6 in den Behälter 3 einströmen. Der Druck im Behälter 3 entspricht dem am Druckhalteventil 25 eingestellten Druck und beträgt beispielsweise 1 bar. Der Druck des flüssigen Stickstoffs in den Zweigleitungen 12, 13, 14, 15 sowie in der Stickstoffzuleitung 5 und der Kältemittelzuleitung 11 entspricht ungefähr dem im Versorgungstank 6 im Bereich des Anschlussstutzens 8. Durch Öffnen eines Ventils 27 in der Anschlussleitung 9 wird zu unterkühlender Stickstoff durch die Stickstoffzuleitung 5 und die Anschlussleitung 9 einem hier nicht gezeigten Verbraucher, beispielsweise einer Strangpresse, zugeführt. Aufgrund des höheren Drucks in der Stickstoffzuleitung 5 gegenüber dem Druck im Behälter 3 weist der durch die Stickstoffzuleitung 5 geführte Flüssigstickstoff eine höhere Temperatur auf als die des Stickstoffs im Flüssigstickstoffbad 10 und gibt folglich über die Kühlschlange 4 Wärme an diesen ab, der daraufhin teilweise verdampft. Der dabei entstehende gasförmige Stickstoff wird über die Abgasleitung 24 abgeführt und ggf. einer weiteren Verwendung zugeführt. Nach Durchlaufen der Kühlschlange 4 besitzt der über die Anschlussleitung 9 transportierte flüssige Stickstoff zumindest annähernd die Temperatur des Flüssigstickstoffbades 10 (beispielsweise minus 196°C), und damit eine Temperatur, die deutlich unterhalb der Siedetemperatur von Stickstoff bei dem in der Stickstoffzuleitung 5 herrschenden Druck liegt.

Die Höhe des Pegels 21 wird mittels der Schwimmerventile 16, 17, 18, 19 geregelt. Unterschreitet der Pegel 21 die für das Schwimmerventil 19 vorgegebenen Grenzfüllhöhe, öffnet sich dieses und Flüssigstickstoff strömt über die Zweigleitung 15 in den Behälter 3. Bei einem geringeren Fluss an zu unterkühlendem Flüssigstickstoff durch die Kühlschlange 4 reicht der über die Zuleitung 15 nachströmende Flüssigstickstoff aus, um die Füllhöhe im Behälter 3 zu stabilisieren und der Pegel 21 sinkt nicht weiter. Bei einem höheren Durchsatz, also einem größeren Fluss von zu unterkühlendem Flüssigstickstoff, erhöht sich auch die Menge an bei der Kühlung an der Kühlschlange 4 verdampfenden Flüssigstickstoff und die über die Zuleitung 15 nachströmende Menge an Flüssigstickstoff reiht nicht aus, um die Füllhöhe zu stabilisieren. Der Pegel 21 sinkt weiter und erreicht schließlich den für das Schwimmerventil 18 vorgegebenen Grenzwert, das daraufhin die Zweigleitung 14 öffnet. Somit fließt Flüssigstickstoff sowohl über die Zweigleitung 15 als auch über die Zweigleitung 16 in den Behälter 3 ein. Im einfachsten Falle, in dem durch beide Zweigleitungen 14, 15 die gleiche Menge an Flüssigstickstoff pro Zeiteinheit geführt werden kann, verdoppelt sich in diesem Fall die Menge des pro Zeiteinheit dem Behälter 3 zugeführten Flüssigstickstoffs. Bei noch höherer Verdampfung und damit verbundenem weiteren Sinken des Pegels 21 werden auch die Schwimmerventile 16 und 17 geöffnet und eine noch größere Menge an Flüssigstickstoff strömt in den Behälter 3 ein, um die Füllhöhe des Flüssigstickstoffs zu stabilisieren. Bei sinkender Verdampfung steigt der Pegel 21 wieder an und die Schwimmerventile 16, 17, 18, 19 schließen nacheinander die Zuleitungen 12, 13, 14, 15 wieder.

Durch die erfindungsgemäße Vorrichtung 1 wird der Zustrom an Flüssigstickstoff aus dem Behälter 6 der Nachfrage entsprechend angepasst. Stärkere Druckschwankungen im Leitungssystem werden so zuverlässig vermieden. Der über Anschlussleitung 9 einer Anwendung zugeführte unterkühlte Flüssigstickstoff kann so genau und zuverlässig auf einen Temperaturwert unterhalb seiner Siedetemperatur eingestellt werden.

Die erfindungsgemäße Einrichtung zum Unterkühlen arbeitet bevorzugt völlig unabhängig von Fremdenergie, jedoch ist nicht ausgeschlossen, zusätzliche mit Fremdenergie arbeitende Einrichtungen vorzusehen, beispielsweise zum Fördern des Kälteträgers oder zur Aufrechterhaltung eines Unterdrucks im Behälter 3.

### Bezugszeichenliste

- 1.: Vorrichtung
- 2.: Deckel
- 3.: Behälter
- 4.: Kühlschlange
- 5.: Stickstoffzuleitung
- 6.: Tank
- 7.: Pegel
- 8.: Anschlussstutzen
- 9.: Anschlussleitung
- 10.: Flüssigstickstoffbad
- 11.: Kältemittelzuleitung
- 12.: Zweigleitung
- 13.: Zweigleitung
- 14.: Zweigleitung
- 15.: Zweigleitung
- 16.: Schwimmerventil
- 17.: Schwimmerventil
- 18.: Schwimmerventil
- 19.: Schwimmerventil
- 20.: -
- 21.: Pegel
- 22.: -
- 23.: -
- 24.: Abgasleitung
- 25.: Druckhalteventil
- 26.: -
- 27.: Ventil

## Patentansprüche

1. Vorrichtung zum Unterkühlen von tiefsiedenden Flüssiggasen, mit einem Vorratsbehälter (6) für ein tiefsiedendes Flüssiggas und einem isolierten Behälter (3) zur Aufnahme eines Kühlbades (10), welches aus einem auf niedrigen Druck entspannten Teilstrom eines aus dem Vorratsbehälter (6) entnommenen tiefsiedenden Flüssiggases gespeist wird, sowie einer Einrichtung (24) zum Abzug der Gasphase aus dem isolierten Behälter (3), und einer Einrichtung zum Regeln des Flüssigkeitsspiegels im Kühlbad (10), wobei ferner eine mit dem Vorratsbehälter (6) strömungsverbundene Auslassleitung (5, 9) für das zu unterkühlende tiefsiedende Flüssiggas vorgesehen ist, die mit einer Einrichtung (4) zur Wärmeübertragung von dem zu unterkühlenden tiefsiedenden Flüssiggas in der Auslassleitung (5, 9) auf das Kühlbad (10) strömungsverbunden ist,
**dadurch gekennzeichnet,**
**dass** zwecks Speisung des Kühlbades (10) eine Mehrzahl von mit dem Vorratsbehälter (6) strömungsverbundenen, jeweils mit einer Sperrarmatur (16, 17, 18, 19) ausgerüsteten Zuleitungen (12, 13, 14, 15) in den isolierten Behälter (3) ausmünden, wobei jede der Sperrarmaturen (16, 17, 18, 19) mit einer Einrichtung zum Erfassen der Füllhöhe des Kühlbades (10) derart wirkverbunden ist, dass die Sperrarmatur (16, 17, 18, 19) bei einer vorgegebenen Grenzfüllhöhe die jeweilige Zuleitung (12, 13, 14, 15) öffnet, wenn die Füllhöhe des Kühlbades (10) unter die Grenzfüllhöhe sinkt und schließt, wenn die Füllhöhe es Kühlbades (10) über die Grenzfüllhöhe steigt, wobei für wenigstens zwei Zuleitungen (12, 13, 14, 15) eine unterschiedliche Grenzfüllhöhe vorgegeben ist.

2. Vorrichtung nach Anspruch 1, **dadurch gekennzeichnet, dass** als Sperrarmaturen (16, 17, 18, 19) in den Zuleitungen (12, 13, 14, 15) Schwimmerventile vorgesehen sind, bei denen eine mit einem Schwimmkörper wirkverbundene Mechanik die Zuleitung (12, 13, 14, 15) bei der Grenzfüllhöhe dieser Zuleitung (12, 13, 14, 15) öffnet bzw. schließt.

3. Vorrichtung nach Anspruch 1 oder 2, **dadurch gekennzeichnet, dass** als Sperrarmatur (16, 17, 18, 19) wenigstens einer Zuleitung (12, 13, 14, 15) ein Magnetventil und als Einrichtung zum Erfassen der Füllhöhe eine elektronische Füllstandserfassung vorgesehen sind, die bei Erreichen der Grenzfüllhöhe der Zuleitung (12, 13, 14, 15) ein Steuersignal zum Öffnen bzw. Schließen des Magnetventils abgibt.

4. Vorrichtung nach einem der vorhergehenden Ansprüche, **dadurch gekennzeichnet, dass** wenigstens drei Zuleitungen (12, 13, 14, 15) unterschiedliche Grenzfüllhöhen aufweisen und die Höhenabstände zwischen den Grenzfüllhöhen gleich oder unterschiedlich sind.

5. Vorrichtung nach einem der vorhergehenden Ansprüche, **dadurch gekennzeichnet, dass** die Zuleitungen (12, 13, 14, 15) jeweils gleichen oder unterschiedlichen Strömungsquerschnitt aufweisen.

6. Vorrichtung nach einem der vorhergehenden Ansprüche, **dadurch gekennzeichnet, dass** der Auslassleitung (5, 9) für das zu unterkühlende Flüssiggas ein Gasphasenseparator zugeordnet ist.

## Claims

1. Apparatus for supercooling low-boiling liquefied gases, comprising a storage container (6) for a low-boiling liquefied gas and an insulated container (3) for receiving a cooling bath (10), which is fed from a partial stream of a low-boiling liquefied gas removed from the storage container (6) that has been expanded to low pressure, and also comprising a device (24) for drawing off the gas phase from the insulated container (3), and a device for controlling the liquid level in the cooling bath (10), wherein furthermore an outlet line (5, 9) flow-connected to the storage container (6) is provided for the low-boiling liquefied gas to be supercooled and is flow-connected to a device (4) for transferring heat from the low-boiling liquefied gas to be supercooled in the outlet line (5, 9) to the cooling bath (10), **characterized**
**in that**, for the purpose of feeding the cooling bath (10), a plurality of supply lines (12, 13, 14, 15) that are flow-connected to the storage container (6) and are each equipped with a shut-off valve (16, 17, 18, 19) open out into the insulated container (3), wherein each of the shut-off valves (16, 17, 18, 19) is operatively connected to a device for detecting the filling level of the cooling bath (10) in such a way that a shut-off valve (16, 17, 18, 19) opens the respective supply line (12, 13, 14, 15) at a prescribed limit filling level when the filling level of the cooling bath (10) falls below the limit filling level and closes it when the filling level of the cooling bath (10) rises above the limit filling level, wherein for at least two supply lines a different limit filling level is prescribed.

2. Apparatus according to Claim 1, **characterized in that** provided as shut-off valves (16, 17, 18, 19) in the supply lines (12, 13, 14, 15) are float valves, in which a mechanism that is operatively connected to a float opens and closes the supply line (12, 13, 14, 15) at the limit filling level of this supply line (12, 13, 14, 15).

3. Apparatus according to Claim 1 or 2, **characterized in that** provided as the shut-off valve (16, 17, 18, 19) of at least one supply line (12, 13, 14, 15) is a solenoid valve and provided as the device for detecting the filling level is an electronic filling level detection, which emits a control signal for opening or closing the solenoid valve when the limit filling level of the supply line (12, 13, 14, 15) is reached.

4. Apparatus according to one of the preceding claims, **characterized in that** at least three supply lines (12, 13, 14, 15) have different limit filling levels and the distances in height between the limit filling levels are the same or different.

5. Apparatus according to one of the preceding claims, **characterized in that** the supply lines (12, 13, 14, 15) have a flow cross section that is the same or different in each case.

6. Apparatus according to one of the preceding claims, **characterized in that** the outlet line (5, 9) for the liquefied gas to be supercooled is assigned a gas phase separator.

## Revendications

1. Dispositif de sous-refroidissement de gaz liquides à bas point d'ébullition, avec un réservoir de stockage (6) pour un gaz liquide à bas point d'ébullition et un réservoir isolé (3) destiné à contenir un bain de refroidissement (10), qui est alimenté à partir d'un courant partiel détendu à basse pression d'un gaz liquide à bas point d'ébullition prélevé dans le réservoir de stockage (6), ainsi qu'avec un dispositif (24) pour extraire la phase gazeuse hors du réservoir isolé (3), et un dispositif pour la régulation du niveau de liquide dans le bain de refroidissement (10), dans lequel il est en outre prévu une conduite d'évacuation (5, 9) reliée en écoulement au réservoir de stockage (6) pour le gaz liquide à bas point d'ébullition à sous-refroidir, qui est reliée en écoulement à un dispositif (4) pour le transfert de chaleur du gaz liquide à bas point d'ébullition à sous-refroidir dans la conduite d'évacuation (5, 9) au bain de refroidissement (10), **caractérisé en ce que** pour l'alimentation du bain de refroidissement (10), une multiplicité de conduites d'arrivée (12, 13, 14, 15) reliées en écoulement au réservoir de stockage (6) et équipées chacune d'une vanne d'arrêt (16, 17, 18, 19) débouchent dans le réservoir isolé (3), dans lequel chacune des vannes d'arrêt (16, 17, 18, 19) est activement reliée à un dispositif pour détecter la hauteur de remplissage du bain de refroidissement (10), de telle manière que la vanne d'arrêt (16, 17, 18, 19) ouvre pour une hauteur de remplissage limite prédéterminée la conduite d'arrivée respective (12, 13, 14, 15), lorsque la hauteur de remplissage du bain de refroidissement (10) descend en dessous de la hauteur de remplissage limite, et la ferme lorsque la hauteur de remplissage du bain de refroidissement (10) monte au-dessus de la hauteur de remplissage limite, dans lequel une hauteur de remplissage limite différente est prédéterminée pour au moins deux conduites d'arrivée (12, 13, 14, 15).

2. Dispositif selon la revendication 1, **caractérisé en ce qu'**il est prévu comme vannes d'arrêt (16, 17, 18, 19) dans les conduites d'arrivée (12, 13, 14, 15) des soupapes à flotteur, dans lesquelles un mécanisme relié activement à un corps de flotteur ouvre ou ferme la conduite d'arrivée (12, 13, 14, 15) pour la hauteur de remplissage limite de cette conduite d'arrivée (12, 13, 14, 15).

3. Dispositif selon la revendication 1 ou 2, **caractérisé en ce qu'**il est prévu comme vanne d'arrêt (16, 17, 18, 19) d'au moins une conduite d'arrivée (12, 13, 14, 15) une soupape magnétique et comme dispositif pour détecter la hauteur de remplissage un détecteur de niveau de remplissage électronique, qui envoie un signal de commande pour l'ouverture ou la fermeture de la soupape magnétique lorsque la hauteur de remplissage de la conduite d'arrivée (12, 13, 14, 15) est atteinte.

4. Dispositif selon l'une quelconque des revendications précédentes, **caractérisé en ce qu'**au moins trois conduites d'arrivée (12, 13, 14, 15) présentent des hauteurs de remplissage limites différentes et les écarts de hauteur entre les hauteurs de remplissage limites sont égaux ou différents.

5. Dispositif selon l'une quelconque des revendications précédentes, **caractérisé en ce que** les conduites d'arrivée (12, 13, 14, 15) présentent respectivement une section transversale d'écoulement égale ou différente.

6. Dispositif selon l'une quelconque des revendications précédentes, **caractérisé en ce qu'**un séparateur de phase gazeuse est associé à la conduite d'évacuation (5, 9) pour le gaz liquide à refroidir.
